# EUROPÄISCHE PATENTSCHRIFT

(11) **EP 1 591 281 B1**
(45) Veröffentlichungstag und Bekanntmachung des Hinweises auf die Patenterteilung: **19.03.2008**
(21) Anmeldenummer: 05008831.9
(22) Anmeldetag: 22.04.2005
(51) Int. Cl.: B60G 17/052

(54) **Luftfederungseinrichtung für Fahrzeuge mit Individualregelung und nur einem Drucksensor**
Pneumatic suspension unit for vehicles with individual regulation and only one pressure sensor
Système de suspension pneumatique pour véhicules avec régulation individuelle et seulement un capteur de pression

(30) Priorität: 26.04.2004 DE 102004020527
(43) Veröffentlichungstag der Anmeldung: 02.11.2005
(73) Patentinhaber: KNORR-BREMSE SYSTEME FÜR NUTZFAHRZEUGE GMBH, 80809 München (DE)
(72) Erfinder: Geiger, Winfried, 75417 Mühlacker (DE); Fecht, Günther, 71691 Freiberg (DE)
(74) Vertreter: Schönmann, Kurt

(56) Entgegenhaltungen:
- EP-A- 0 170 794
- EP-A- 1 321 320
- DE-A1- 19 515 255
- US-A- 4 484 784
- US-A- 5 193 063
- US-A1- 2001 017 449

## Beschreibung

### Stand der Technik

Die Erfindung geht aus von einer Luftfederungseinrichtung für Nutzfahrzeuge, gemäß dem Oberbegriff von Anspruch 1.

Bei modernen Nutzfahrzeugen wird gefordert, die Achslasten zu ermitteln, insbesondere die Verteilung der Lasten auf die Vorder-, Hinter-, und auf eine gegebenenfalls vorhandene Vorlauf- oder Nachlaufachse bzw. Liftachse. Bei einer bekannten gattungsgemäßen Luftfederungseinrichtung ist eine sog. Individualregelung verwirklicht, bei welcher beispielsweise die Hinterachse zweikanalig geregelt wird und die Luftbälge einer Liftachse einen weiteren Kanal bilden und gemeinsam geregelt werden. Ein weiterer Kanal ist für den Hubbalg der Liftachse vorgesehen. Dann sind bis zu sieben Drucksensoren notwendig, welche den Druck in dem jeweiligen Luftbalg messen und einen Rückschluss auf die von ihm abgestützten Lasten erlauben. Bei unmittelbar an den Luftbälgen montierten Drucksensoren ist eine entsprechende pneumatische Verrohrung und die elektrische Verkabelung aufwändig und kostenintensiv. Bei in den Luftbalgventilen montierten Drucksensoren ist für jeden Drucksensor eine Druckzuführung sowie ein Platinenplatz und eine Schutzbeschaltung vorzusehen.

Eine gattungsgemäße Luftfederungseinrichtung ist zum Teil aus der US 2001 /017449 A1 und der US-A-5 193 063 bekannt. Die erstgenannte Schrift beschreibt eine Ventileinrichtung, durch welche das wenigstens eine Luftbalgventil gleichzeitig vom Druckluftvorrat und von der Entlüftung abkoppelbar ist und dass ein Drucksensor zum Messen des Luftdrucks im Strömungsweg zwischen der Ventileinrichtung und dem wenigstens einen Luftbalgventil, jenseits des zugeordneten Luftbalgs vorgesehen ist. Jenseits des Luftfederbalgs bedeutet, dass der Drucksensor nicht auf der Seite des Luftbalgventils angeordnet ist, auf welchem sich der zugeordnete Luftbalg befindet, sondern auf der vom Luftbalg abgewandten Seite. Der Drucksensor befindet sich dann bezogen auf den Strömungsweg zwischen der Ventileinrichtung und den Luftbalgventilen an einer zentralen Stelle. Die Ventileinrichtung sorgt dafür, dass der Druck im Strömungsweg zwischen der Ventileinrichtung und dem jeweiligen Luftbalgventil sich nicht dynamisch verändert und sich ein konstantes Druckniveau einstellt. Folglich wird der Drucksensor nicht mit den dynamischen, sondern in vorteilhafter Weise mit für die Lastenmessung notwendigen statischen Luftbalgdrücken beaufschlagt. Der Drucksensor kann durch sequentielles Durchschalten der Luftbalgventile mit dem jeweiligen Luftbalg zur individuellen Druckmessung verbunden werden, so dass für eine beliebige Anzahl von Luftfederbälgen bzw. Hubbälgen lediglich ein einziger Drucksensor ausreicht.

Die EP 1 321 320 A3 beschreibt eine Luftfederungseinrichtung für Nutzfahrzeuge mit einer Mehrzahl von Luftfederbälgen, die selektiv über mehrere Ventilanordnungen mit einer Druckmittelquelle verbindbar sind. Dabei ist eine Drucksensierventilanordnung vorgesehen, durch welche ein Drucksensor selektiv mit zumindest einem der Luftfederbälge verbindbar ist.

Der vorliegenden Erfindung liegt die Aufgabe zugrunde, eine Luftfederungseinrichtung der eingangs erwähnten Art derart weiter zu entwickeln, dass sie kostengünstiger zu fertigen ist.

Diese Aufgabe wird erfindungsgemäß durch die kennzeichnenden Merkmale von Anspruch 1 gelöst.

### Vorteile der Erfindung

Indem der die Ventileinrichtung beinhaltende Ventilblock und der Drucksensor einer Achse des Nutzfahrzeugs, vorzugsweise der Hinterachse zugeordnet ist, wobei durch den der einen Achse zugeordneten Ventilblock gleichzeitig wenigstens einer weiteren Achse, insbesondere einer Vorderachse und einer Liftachse zugeordnete Luftbälge belüftbar oder entlüftbar sind, werden sämtliche Luftbalgventile des Nutzfahrzeugs von einem einzigen Ventilblock druckversorgt bzw. -entsorgt, was in einer vorteilhaft niedrigen Anzahl von Ventilen resultiert. Weiterhin ist dann ein einziger, pneumatisch zentral angeordneter Drucksensor zur Messung des Drucks der Luftbälge an sämtlichen Achsen ausreichend.

Der Drucksensor ist mit dem Luftbalg oder der Gruppe von Luftbälgen der jeweiligen Achse durch Durchschalten der den Luftbälgen zugeordneten Luftbalgventile in druckleitende Verbindung bringbar, um dort den statischen Druck zu messen. Durch individuelles Schalten der Luftbalgventile kann der Drucksensor mit allen Luftbälgen verbunden und damit der statische Druck in allen Luftbälgen ermittelt werden, durch welchen auf den Beladungszustand des Nutzfahrzeugs bzw. auf die Lastverteilung rückgeschlossen werden kann. Wenn beispielsweise bei eingestelltem Soll-Niveau die den Luftbälgen der Hinterachse zugeordneten Luftbalgventile und auch die vorgeschaltete Ventileinrichtung wegen fehlender Notwendigkeit einer weiteren Belüftung sich in Sperrstellung befinden und der Lastzustand an der Hinterachse ermittelt werden soll, werden lediglich die Luftbalgventile der Hinterachse geöffnet, woraufhin der dort herrschende Druck vom Drucksensor gemessen werden kann. Weil die den Luftbalgventilen vorgeschaltete Ventileinrichtung bei einer solchen Druckmessung stets geschlossen bleibt und die Luftbälge damit vom Druckluftvorrat und der Entlüftung abgekoppelt sind, ist keine Be- oder Entlüftung der Luftbälge und damit eine Druckänderung möglich, welche das Messergebnis verfälschen könnte.

Der Ventilblock beinhaltet ein 3/2-Wegeventil, welches entweder die Entlüftung oder den Druckluftvorrat mit einem Anschluss der Ventileinrichtung verbindet. In diesem Fall kann die Ventileinrichtung durch ein 2/2-Wegeventil gebildet werden, welches entweder den Anschluss zu den Luftbalgventilen durchschaltet oder ihn sperrt.

Zumindest an der Hinterachse und an der Liftachse soll den Luftbälgen jeder Fahrzeugseite vorzugsweise ein 2/2-Wegeventil als Luftbalgventil zugeordnet und wenigstens einige der Ventile des Ventilblocks Magnetventile mit einem pneumatischen Vorsteueranschluss für eine pneumatisch-elektrische Vorsteuerung sein.

Weiterhin sind der Ventilblock, der Drucksensor sowie ein elektronisches Steuergerät für die pneumatisch-elektrische Vorsteuerung vorzugsweise in einer Baueinheit zusammengefasst, was eine kompakte Baugröße bedingt.

Ein weiterer, der Vorderachse zugeordneter Ventilblock kann vorzugsweise ein 3/2-Wegeventil beinhalten, durch welches die Luftfederbälge der Vorderachse über eine Drosseleinrichtung miteinander oder mit den Luftbalgventilen der anderen Achsen verbunden sind.

Luftfederungseinrichtungen in den oben beschriebenen Ausführungen haben den Vorteil, dass mit einem einzigen Aufbau sowohl eine Gleichdruckregelung als auch eine Individualdruckregelung realisiert werden kann. Genaueres geht aus der folgenden Beschreibung der Ausführungsbeispiele hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: einen schematischen Funktionsschaltplan einer Luftfederungseinrichtung gemäß einer ersten Ausführungsform der Erfindung;
- Fig.2: einen schematischen Funktionsschaltplan einer Luftfederungseinrichtung gemäß einer weiteren Ausführungsform der Erfindung.

### Beschreibung der Ausführungsbeispiele

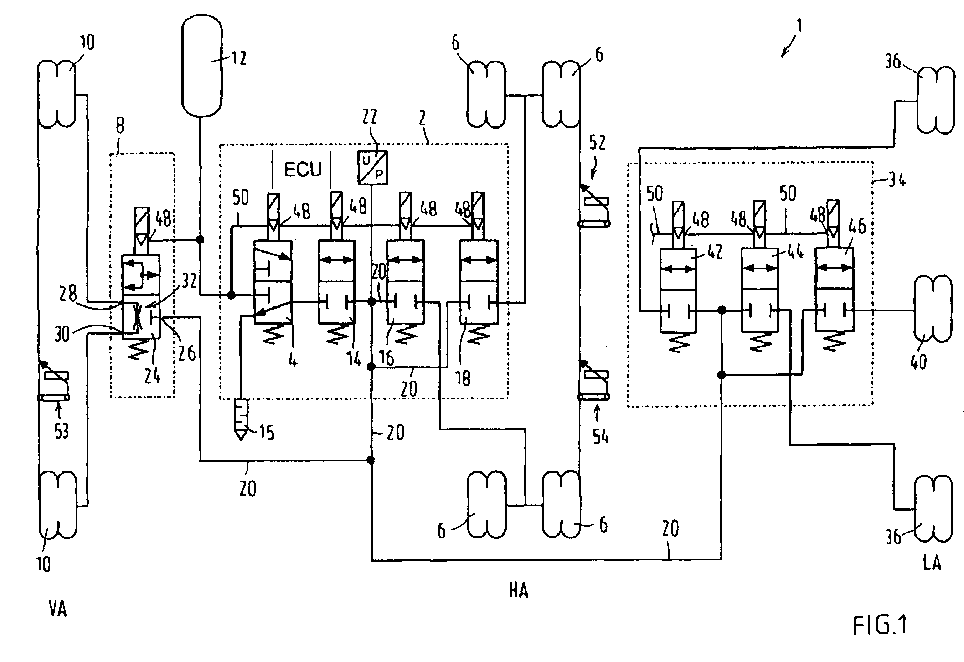

Die in Fig.1 insgesamt mit 1 bezeichnete Ausführungsform einer Luftfederungseinrichtung eines Nutzfahrzeugs umfasst einen einer angetriebnen Hinterachse HA zugeordneten Ventilblock 2, beinhaltend ein zentrales 3/2-Wegeventil 4 um Be- und Entlüften von Luftfederbälgen 6 der Hinterachse, und einen einer Vorderachse VA zugeordneten Ventilblock 8 zum Be- und Entlüften von Luftfederbälgen 10 der Vorderachse VA.

Das zentrale 3/2-Wegeventil 4 des der Hinterachse HA zugeordneten Ventilblocks 2 bringt entweder einen Druckluftvorrat 12 mit einem Druckanschluss eines 2/2-Wegeventils 14 oder Letzteren mit einer Entlüftung 15 in Verbindung. Ein weiterer Druckanschluss des 2/2-Wegeventils 14 ist mit Druckanschlüssen von nachgeschalteten, den Luftfederbälgen 6 je einer Fahrzeugseite der Hinterachse HA zugeordneten Luftbalgventilen in Form von 2/2-Wegeventilen 16, 18 verbunden, deren weitere Druckanschlüsse mit den Luftfederbälgen 6 der Hinterachse HA verbunden sind. Weiterhin ist der in Bezug auf die Luftbalgventile 16, 18 diesseitige Druckanschluss des 2/2-Wegeventils 14 über eine Druckleitung 20 an einen Drucksensor 22 angeschlossen. Der Drucksensor 22 misst den Druck in der Druckleitung 20, insbesondere in einer Druckverbindung zwischen dem 2/2-Wegeventil 14 und den Luftbalgventilen 16, 18, jenseits der Luftfederbälge 6. Die Druckverbindung 20 kann beispielsweise als Druckkanal in dem Ventilblock 2 ausgebildet sein. Die beiden Luftbalgventile 16, 18 schalten als 2/2-Wegeventile entweder die ihnen zugeordneten Luftfederbälge 6 der Hinterachse HA auf den Druckanschluss des 2/2-Wegeventils 14 oder sperren eine solche Verbindung.

Der der Vorderachse VA zugeordnete Ventilblock 8 beinhaltet ebenfalls ein 3/2-Wegeventil 24, welches wie ein oben beschriebenes Luftbalgventil wirkt und je nach seiner Schaltstellung entweder seinen Vorratsdruckanschluss 26 mit Anschlüssen 28, 30 der Luftfederbälge 10 der Vorderachse VA oder, darüber hinaus in einer Fahrstellung die beiden Anschlüsse 28, 30 über eine Drossel 32 miteinander verbindet und den Vorratsdruckanschluss 26 sperrt. Der Vorratsdruckanschluss 26 des Ventilblocks 8 ist wiederum mit der Druckleitung 20 und insbesondere mit dem Druckanschluss des 2/2-Wegeventils 14 und mit dem Drucksensor 22 verbunden.

Ein weiterer, einer Liftachse LA zugeordneter Ventilblock 34 umfasst zwei Luftfederbälge 36 für die rechte und linke Seite der Liftachse LA sowie einen Hubbalg 40 zum Heben und Senken der Liftachse LA, weiche eine Vorlauf- oder eine Nachlaufachse sein kann. Dabei ist den beiden Luftfederbälgen 36 und dem Hubbalg 40 der Liftachse LA je ein 2/2-Wegeventil 42, 44, 46 als Luftbalgventil zugeordnet, von welchem ein Druckanschluss jeweils mit der Druckleitung 20 und der andere Druckanschluss mit dem jeweiligen Luftbalg 36, 40 in Verbindung steht. Somit ist der Drucksensor 22 über die Druckleitung 20 mit sämtlichen Luftbalgventilen 16, 18, 24, 42, 44, 46 verbunden.

Sämtliche Ventile 4, 16, 18, 24, 42, 44 und 46 sind vorzugsweise als pneumatisch vorgesteuerte Magnetventile ausgebildet, d.h. dass sie jeweils durch ein aus Maßstabsgründen nicht gezeigtes Relaisventil angesteuert werden, welches seinerseits elektrisch gesteuert wird. Die elektrische Ansteuerung der Ventile 4, 16, 18, 24, 42, 44 und 46 wird über ein elektronisches Steuergerät ECU realisiert. Zur Druckluftversorgung der Vorsteuerung ist ein jeder Steueranschluss 48 der Magnetventile 4, 16, 18, 24, 42, 44 und 46 über eine pneumatische Leitung 50 mit dem Druckluftvorrat 12 verbunden.

Zwei Niveaugeber, ein der rechten Seite zugeordneter Niveaugeber 52 und ein der linken Seite zugeordneter Niveaugeber 54 messen mit Hilfe von Drehpotentiometern, deren Spannungsabgriff über je einen Antriebshebel mit der Hinterachse HA verbunden ist, den Abstand zwischen der Hinterachse HA und dem Fahrzeugaufbau. Ein weiterer Niveaugeber 53 dieser Bauart ist der Vorderachse VA zugeordnet. Die Niveaugeber 52, 53, 54 sind mit dem elektronischen Steuergerät ECU signalübertragend verbunden. Der Ventilblock 2 der Hinterachse HA, der Drucksensor 22 sowie das elektronische Steuergerät ECU für die pneumatisch-elektrische Vorsteuerung sind in einer Baueinheit zusammengefasst, beispielsweise dadurch, dass diese Bauteile in einem gemeinsamen Gehäuse aus Kunststoff oder aus Aludruckguss untergebracht sind.

Vor diesem Hintergrund ist die Funktionsweise der erfindungsgemäßen Luftfederungseinrichtung 1 wie folgt:

Wenn bei abgesenkter Liftachse LA das Nutzfahrzeug beladen wird, so werden die Luftfederbälge 6, 10 und 36 zusammengedrückt und der Fahrzeugaufbau senkt sich. Die mit der Hinterachse HA und der Vorderachse VA verbundenen Hebel drehen die Schleifer der Drehpotentiometer der Niveaugeber 52, 53, 54 auf der jeweiligen Potentiometerbahn in die Stellung "Heben". Das Steuergerät ECU erkennt die Spannungsabweichung und gibt elektrische Stellbefehle an das 3/2-Wegeventil 4 und die beiden Liftbalgventile 16, 18 des der Hinterachse HA zugeordneten Ventilblocks 2, an das 3/2-Wegeventil 24 des der Vorderachse VA zugeordneten Ventilblocks 8 sowie an die beiden den Luftfederbälgen 36 der Liftachse LA zugeordneten Luftbalgventile 42, 44 (bestromter Zustand).

Das 3/2-Wegeventil 4 des der Hinterachse HA zugeordneten Ventilblocks 2 schaltet daraufhin in seine Belüftungsstellung, in welcher der Druckluftvorrat 12 mit dem Druckanschluss des 2/2-Wegeventils 14 verbunden wird, welches durchgeschaltet den Druck an die Druckanschlüsse der nachgeschalteten Luftbalgventile 16, 18 weiterleitet, welche ihrerseits diesen Druck zu den Luftfederbälgen 6 der Hinterachse HA durchschalten. Gleichzeitig steht dieser Druck in der Druckleitung 20 zwischen dem 2/2-Wegeventil 14 und den beiden Luftbalgventilen 16, 18 an und wird über diese in den Vorratsdruckanschluss 26 des 3/2-Wegeventils 24 des der Vorderachse VA zugeordneten Ventilblocks 8 eingesteuert, welches ihn an die Luftfederbälge 10 der Vorderachse VA weiterschaltet. Gleichzeitig steht der Druck des Druckluftvorrats 12 über die Druckleitung 20 auch an den Druckanschlüssen der sich in Durchschaltstellung befindlichen Luftbalgventile 42, 44 der Liftachse LA an.

Hierdurch werden die Luftfederbälge 6, 10, 36 der Hinter-, Vorder- und Liftachse HA, VA, LA belüftet und der Fahrzeugaufbau insgesamt auf das gewünschte Soll-Niveau angehoben. Durch eine entsprechende individuelle Ansteuerung der Luftbalgventile 16, 18, 42, 44 der Hinterachse HA und der Liftachse LA kann das Niveau der beiden Fahrzeugseiten unterschiedlich angepasst, werden, was im Falle einer exzentrischen Ladung notwendig sein kann. Ebenfalls ist ein unterschiedliches Niveau an der Hinterachse HA, an der Vorderachse VA und an der Liftachse LA durch eine entsprechende Ansteuerung der Luftbalgventile 16, 18, 24, 42, 44 möglich. Mit dem beschriebenen Aufbau der Luftfederungseinrichtung 1 kann folglich nicht nur eine Individualregelung sondern auch eine Gleichdruckregelung realisiert werden, durch gleichzeitiges und seitenweises Ansteuern der beiden Luftbalgventile 16, 18 der Hinterachse und der Liftachse 42, 44, wobei zwischen der rechten und linken Fahrzeugseite alternierend umgeschaltet wird. Der jeweilige Regelalgorithmus kann wahlweise im Steuergerät ECU programmiert sein.

In Fahrstellung, d.h. mit an das Soll-Niveau angepasstem Niveau des Fahrzeugaufbaus sind sämtliche Magnetventile 4, 14, 16, 18, 24, 42, 44 und 46 unbestromt und in Schaltstellungen, in welchen die Luftfederbälge 6, 10, 36 sowohl gegen den Druckluftvorrat 12 als auch gegen die Entlüftung 15 gesperrt sind, so dass keine Druckluft aus den Luftfederbälgen 6, 10, 36 hinein- oder aus ihnen herausströmen kann.

Nachdem das gewünschte Niveau eingestellt ist, kann durch individuelles Schalten der Luftbalgventile 16, 18, 24, 42, 44 der Drucksensor 22 mit allen Luftfederbälgen 6, 10, 36 verbunden und damit der jeweils vorherrschende statische Druck ermittelt werden, durch welchen auf den Beladungszustand des Nutzfahrzeugs bzw. auf die Lastverteilung rückgeschlossen werden kann. Wenn beispielsweise bei eingestelltem Soll-Niveau die den Luftfederbälgen 6 der Hinterachse HA zugeordneten Luftbalgventile 16, 18 und auch das vorgeschaltete 2/2-Wegeventil 14 wegen fehlender Notwendigkeit einer weiteren Belüftung sich in Sperrstellung befinden und der Lastzustand an der Hinterachse HA ermittelt werden soll, werden lediglich die beiden Luftbalgventile 16, 18 geöffnet, woraufhin der in den Luftfederbälgen 6 der Hinterachse HA herrschende Druck ebenfalls in der Druckleitung 20 zwischen den Luftbalgventilen 16, 18 und dem weiterhin gesperrten 2/2-Wegeventil 14 ansteht und folglich vom Drucksensor 22 gemessen werden kann. Weil das den Luftbalgventilen 16, 18 vorgeschaltete 212-Wegeventil 14 bei einer solchen Druckmessung stets geschlossen bleibt und die Luftfederbälge 6 damit vom Druckluftvorrat 12 und der Entlüftung 15 abgekoppelt sind, ist keine Be- oder Entlüftung der Luftfederbälge 6 und damit auch keine Druckänderung möglich. Andererseits kann die an den Drucksensor 22 angeschlossene Druckleitung 20 zwischen dem 2/2-Wegeventil 14 und den Luftbalgventilen 16, 18 jederzeit unter den in dem jeweiligen Luftfederbalg 6 herrschenden Druck durch Öffnen des jeweiligen Luftbalgventils 16, 18 gesetzt und folglich der Druck in jedem Luftfederbalg 6 individuell gemessen werden. Der Drucksensor 22 befindet sich bezogen auf den Strömungsweg zwischen dem 2/2-Wegeventil 14 und den Luftbalgventilen 16, 18 folglich an einer zentralen Stelle.

Eine Messung des Beladungszustands erfolgt vorzugsweise nach jeder Beladungsänderung. Da sich Druckstöße aufgrund einer Fahrt über Unebenheiten nicht auf das Messergebnis auswirken sollen, soll eine Druckmessung bevorzugt bei langsamer Fahrt bzw. im Stillstand stattfinden.

Zum Absenken des Niveaus des Fahrzeugaufbaus drehen die mit den Fahrzeugachsen verbundenen Hebel die Schleifer der Drehpotentiometer der Niveaugeber 52, 53, 54 auf der jeweiligen Potentiometerbahn in die Stellung "Senken". Das Steuergerät ECU erkennt die Spannungsabweichung und gibt elektrische Stellbefehle an das 3/2-Wegeventil 4 und die Luftbalgventile 16, 18 des der Hinterachse HA zugeordneten Ventilblocks 2, an das 3/2-Wegeventil 24 des der Vorderachse VA zugeordneten Ventilblocks 8 sowie an die Luftbalgventile 42, 44 des Ventilblocks 34 der Liftachse LA.

Zum gleichmäßigen Absenken des Fahrzeugaufbaus schalten sämtliche Luftbalgventile 16, 18, 24, 42, 44 sowie das 2/2-Wegeventil 14 des Ventilblocks 2 der Hinterachse HA durch. Weiterhin wird das 3/2-Wegeventil 4 des der Hinterachse HA zugeordneten Ventilblocks 2 in seine Entlüftungsstellung geschaltet, in welcher es das 2/2-Wegeventil 14 mit der Entlüftung 15 verbindet und seinen mit dem Druckluftvorrat 12 verbundenen Druckanschluss sperrt. Infolgedessen wird der Druck in den Luftfederbälgen 6 der Hinterachse HA reduziert. Gleichzeitig schaltet das 3/2-Wegeventil 24 der Vorderachse VA in Durchgangsstellung, in welcher der Strömungsweg zwischen den Luftfederbälgen 10 der Vorderachse VA und der Druckleitung 20 geöffnet ist und folglich Druckluft aus den Luftfederbälgen 10 über die Druckleitung 20, das geöffnete 2/2-Wegeventil 14 und das 3/2-Wegeventil 4 in die Entlüftung 15 strömen kann, bis das Soll-Niveau erreicht ist. Gleiches gilt auch für den Strömungsweg der abzuführenden Druckluft aus den Luftfederbälgen 36 der Liftachse LA über die geöffneten Luftbalgventile 42, 44 und die Druckleitung 20.

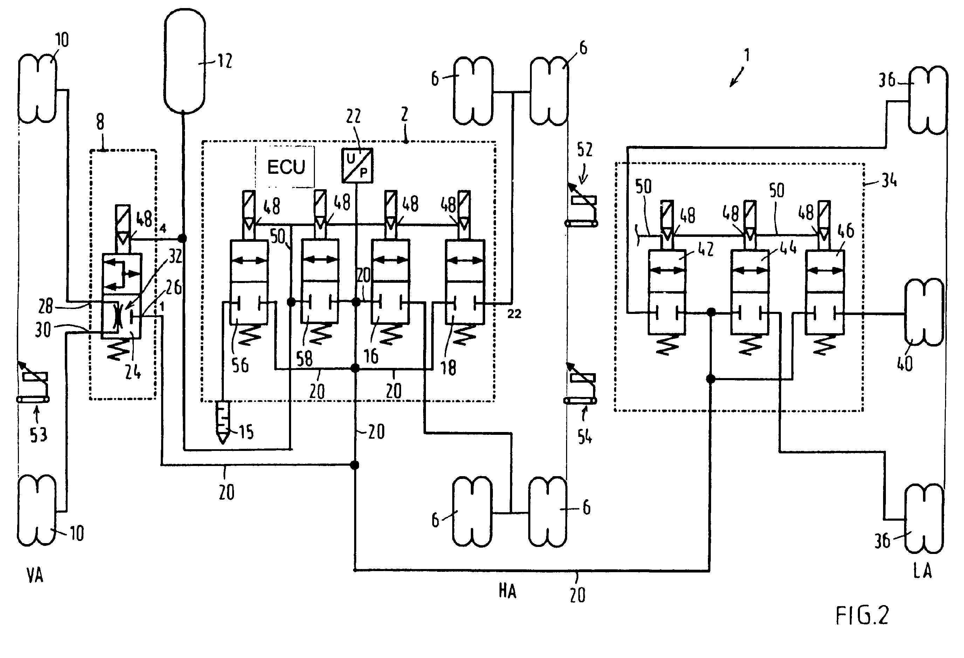

Bei dem weiteren Ausführungsbeispiel der Erfindung nach Fig.2 sind die gegenüber dem vorhergehenden Beispiel gleichbleibenden und gleichwirkenden Teile durch die gleichen Bezugszahlen gekennzeichnet. Im Unterschied zu diesem beinhaltet der Ventilblock der Hinterachse HA anstatt eines 3/2-Wegeventils ein erstes 2/2-Wegeventil 56, welches entweder die Entlüftung 15 zur Druckleitung 20 und damit zu den Luftbalgventilen 16, 18, 24, 42, 44 durchschaltet oder diesen Strömungsweg sperrt. Weiterhin ist ein nachgeschaltetes zweites 2/2-Wegeventil 58 vorhanden, welches entweder den Druckluftvorrat 12 über die Druckleitung 20 zu den Luftbalgventilen 16, 18, 24, 42, 44 durchschaltet oder diesen Strömungsweg sperrt. Das erste 2/2-Wegeventil 56 dient folglich einerseits der Entlüftung aller Luftfederbälge 6, 10, 36 und andererseits zur Abkopplung Letzterer von der Entlüftung 15, um eine Messung des statischen Drucks in der Druckleitung 20 durch den Drucksensor 22 zu ermöglichen. Genauso führt das zweite 2/2-Wegeventil 58 eine Doppelfunktion aus, indem es zum einen die Druckluft im Druckluftvorrat 12 an die nachgeordneten Luftbalgventile 16, 18, 24, 42, 44 weiterschaltet und zum andern Letztere vom Druckluftvorrat 12 während einer statischen Druckmessung abkoppelt.

### Bezugszeichenliste

- 1: Luftfederungseinrichtung
- 2: Ventilblock
- 4: 3/2-Wegeventil
- 6: Luftfederbälge
- 8: Ventilblock
- 10: Luftfederbälge
- 12: Druckluftvorrat
- 14: 2/2-Wegeventil
- 15: Entlüftung
- 16: 2/2-Wegeventil
- 18: 2/2-Wegeventil
- 20: Druckleitung
- 22: Drucksensor
- 24: 3/2-Wegeventil
- 26: Vorratsdruckanschluss
- 28: Anschluss
- 30: Anschluss
- 32: Drossel
- 34: Ventilblock
- 36: Luftfederbälge
- 40: Hubbalg
- 42: 2/2-Wegeventil
- 44: 2/2-Wegeventil
- 46: 2/2-Wegeventil
- 48: Steueranschluss
- 50: pneumat. Leitung
- 52: Niveaugeber
- 53: Niveaugeber
- 54: Niveaugeber
- 56: 2/2-Wegeventil
- 58: 2/2-Wegeventil

## Patentansprüche

1. Luftfederungseinrichtung (1) für Nutzfahrzeuge, beinhaltend einen Ventilblock (2) zum Belüften von mehreren Luftbälgen (6, 10, 36, 40) mit Druckluft aus einem Druckluftvorrat (12) oder zum Entlüften der Luftbälge (6, 10, 36, 40) durch eine Entlüftung (15), wobei der Ventilblock (2) wenigstens ein einem Luftbalg oder einer Gruppe von Luftbälgen der mehreren Luftbälge (6, 10, 36, 40) zugeordnetes Luftbalgventil (16, 18, 24, 42, 44, 46) zum individuellen Be- und Entlüften dieses Luftbalgs oder dieser Gruppe von Luftbälgen beinhaltet, wobei der Ventilblock (2) weiterhin eine Ventileinrichtung (14) umfasst, durch welche das wenigstens eine Luftbalgventil (16, 18, 24, 42, 44, 46) gleichzeitig vom Druckluftvorrat (12) und von der Entlüftung (15) abkoppelbar ist und dass ein Drucksensor (22) zum Messen des Luftdrucks im Strömungsweg (20) zwischen der Ventileinrichtung (14) und dem wenigstens einen Luftbalgventil (16, 18, 24, 42, 44, 46), jenseits des zugeordneten Luftbalgs vorgesehen ist, **dadurch gekennzeichnet, dass**
a) der die Ventileinrichtung (14) beinhaltende Ventilblock (2) und der Drucksensor (22) einer Achse (HA) des Nutzfahrzeugs zugeordnet sind, wobei durch den der einen Achse (HA) zugeordneten Ventilblock (2) gleichzeitig wenigstens einer weiteren Achse (VA, LA) zugeordnete Luftbälge (10, 36, 40) belüftbar oder entlüftbar sind und
b) der Drucksensor (22) mit dem Luftbalg oder der Gruppe von Luftbälgen der jeweiligen Achse (HA, VA, LA) durch Durchschalten der den Luftbälgen (6, 10, 36, 40) zugeordneten Luftbalgventile (16, 18, 24, 42, 44, 46) in druckleitende Verbindung bringbar ist, und
c) der Ventilblock (2) ein 3/2-Wegeventil (4) beinhaltet, welches entweder die Entlüftung (15) oder den Druckluftvorrat (12) mit einem Anschluss der Ventileinrichtung (14) verbindet, und
d) die Ventileinrichtung ein 2/2-Wegeventil (14) beinhaltet, welches entweder den Anschluss zu den Luftbalgventilen (16, 18, 24, 42, 44, 46) durchschaltet oder ihn sperrt.

2. Luftfederungseinrichtung nach Anspruch 1, **dadurch gekennzeichnet, dass** der die Ventileinrichtung (14) beinhaltende Ventilblock (2) und der Drucksensor (22) einer Hinterachse (HA) zugeordnet sind.

3. Luftfederungseinrichtung nach Anspruch 2, **dadurch gekennzeichnet, dass** durch den der Hinterachse (HA) zugeordneten Ventilblock (2) gleichzeitig einer Vorderachse (VA) und einer Liftachse (LA) zugeordnete Luftbälge (10, 36, 40) belüftbar oder entlüftbar sind.

4. Luftfederungseinrichtung nach wenigstens einem der vorhergehenden Ansprüche, **dadurch gekennzeichnet, dass** zumindest an der Hinterachse (HA) und an der Liftachse (LA) den Luftbälgen (6, 36) jeder Fahrzeugseite ein 2/2-Wegeventil (16, 18, 42, 44) als Luftbalgventil zugeordnet ist.

5. Luftfederungseinrichtung nach wenigstens einem der vorhergehenden Ansprüche, **dadurch gekennzeichnet, dass** wenigstens einige der Ventile (4, 14, 16, 18, 24, 42, 44, 46) Magnetventile mit einem pneumatischen Vorsteueranschluss (48) für eine pneumatisch-elektrische Vorsteuerung sind.

6. Luftfederungseinrichtung nach Anspruch 5, **dadurch gekennzeichnet, dass** zumindest der Ventilblock (2), der Drucksensor (22) sowie ein elektronisches Steuergerät (ECU) für die pneumatisch-elektrische Vorsteuerung in einer Baueinheit zusammengefasst sind.

7. Luftfederungseinrichtung nach wenigstens einem der vorhergehenden Ansprüche, **dadurch gekennzeichnet, dass** ein der Vorderachse (VA) zugeordneter Ventilblock (8) ein 3/2-Wegeventil (24) beinhaltet, durch welches die Luftfederbälge (10) der Vorderachse (VA) über eine Drosseleinrichtung (32) miteinander oder mit den Luftbalgventilen (16, 18, 42, 44, 46) der anderen Achsen (HA, LA) verbunden sind.

## Claims

1. Pneumatic suspension unit (1) for utility vehicles, including a valve block (2) for aerating a plurality of air bellows (6, 10, 36, 40) with compressed air from a compressed-air reservoir (12) or for venting said air bellows (6, 10, 36, 40) through a venting system (15), with said valve block (2) including at least one air bellows valve (16, 18, 24, 42, 44, 46) associated with one air bellows or with a group of air bellows among said plurality of air bellows (6, 10, 36, 40) for individual aeration and ventilation of this air bellows or this group of air bellows, wherein said valve block (2) comprises moreover a valve means (14) by means of which said at least one air bellows valve (16, 18, 24, 42, 44, 46) may be decoupled simultaneously from said compressed-air reservoir (12) and said venting system (15), and wherein a pressure sensor (22) is provided for measuring the air pressure in the flow path (20) between said valve means (14) and said at least one air bellows valve (16, 18, 24, 42, 44, 46) on the other side of the associated air bellows, **characterised in that**
(a) said valve block (2) including said valve means (14) and said pressure sensor (22) are associated with one axle (HA) of the utility vehicle, with said valve block (2) associated with said one axle (HA) permitting the aeration or ventilation of air bellows (10, 36, 40) associated with at least one further axle (VA, LA) at the same time, and
(b) said pressure sensor (22) can be brought into pressure-transferring connection with said air bellows or said group of air bellows of the respective axle (HA, VA, LA) by through-connection of said air bellows valves (16, 18, 24, 42, 44, 46) associated with said air bellows (6, 10, 36, 40), and
(c) said valve block (2) includes a 3/2-way valve (4) that connects either said venting system (15) or said compressed-air reservoir (12) to one port of said valve means (14), and
(d) said valve means includes a 2/2-way valve (14) that either connects or closes the port to said air bellows valves (16, 18, 24, 42, 44, 46).

2. Pneumatic suspension unit according to Claim 1, **characterised in that** said valve block (2) including said valve means (14) and said pressure sensor (22) are associated with a rear axle (HA).

3. Pneumatic suspension unit according to Claim 2, **characterised in that** air bellows (10, 36, 40) associated with one front axle (VA) and one lifting axle (LA) are adapted to be aerated or vented at the same time by means of said valve block (2) associated with said rear axle (HA).

4. Pneumatic suspension unit according to at least one of the preceding Claims, **characterised in that** a 2/2-way valve (16, 18, 42, 44) is associated as air bellows valve with the air bellows (6, 36) on each vehicle side at least on said rear axle (HA) and on said lifting axle (LA).

5. Pneumatic suspension unit according to at least one of the preceding Claims, **characterised in that** at least some of said valves (4, 14, 16, 18, 24, 42, 44, 46) are solenoid valves with a pneumatic pilot-operating port (48) for a pneumatic-electrical pilot function.

6. Pneumatic suspension unit according to Claim 5, **characterised in that** at least said valve block (2), said pressure sensor (22) as well as an electronic controller unit (ECU) are combined in a single module for the pneumatic-electrical pilot function.

7. Pneumatic suspension unit according to at least one of the preceding Claims, **characterised in that** a valve block (8) associated with said front axle (VA) includes a 3/2-way valve (24) through which said air bellows (10) of said front axle (VA) are connected, via a throttle means (32), to each other or to said air bellows valves (16, 18, 42, 44, 46) of the other axles (HA, LA).

## Revendications

1. Système de suspension pneumatique (1) for véhicules utilitaires, comprenant un groupe de soupapes (2) pour l'aération d'une pluralité de soufflets d'air (6, 10, 36, 40) par air comprimé provenant d'un réservoir d'air comprimé (12) ou pour la purge d'air desdits soufflets d'air (6, 10, 36, 40) via un système de purge d'air (15), audit groupe de soupapes (2) comprenant au moins une soupape de soufflet d'air (16, 18, 24, 42, 44, 46) affecté à un soufflet d'air ou à un groupe de soufflets d'air parmi ladite pluralité de soufflets d'air (6, 10, 36, 40) pour l'aération et la purge d'air individuelle de ce soufflet d'air ou ce groupe de soufflets d'air, dans lequel ledit groupe de soupapes (2) comprend au plus un moyen à soupape (14) moyennant duquel ladite au moins une soupape de soufflet d'air (16, 18, 24, 42, 44, 46) se peut découpler, en même temps, dudit réservoir d'air comprimé (12) et dudit système de purge d'air (15), et dans lequel un capteur de pression (22) est disposé à mesurer la pression d'air dans la voie d'écoulement (20) entre ledit moyen à soupape (14) et ladite au moins une soupape de soufflet d'air (16, 18, 24, 42, 44, 46) de l'autre côté du soufflet d'air affecté, **caractérisé en ce que**
(a) ledit groupe de soupapes (2) comprenant ledit moyen à soupape (14) et ledit capteur de pression (22) sont affectés à un essieu (HA) du véhicule utilitaire, audit groupe de soupapes (2) affecté à un essieu (HA) permettant l'aération ou la purge d'air de soufflets d'air (10, 36, 40) affectés à au moins un autre essieu (VA, LA) au même temps, et
(b) ledit capteur de pression (22) peut être porté en connexion à transférer la pression avec ledit soufflet d'air ou ledit groupe de soufflets d'air de l'essieu respectif (HA, VA, LA) par communication directe desdits soupapes de soufflet d'air (16, 18, 24, 42, 44, 46) affectées auxdits soufflets d'air (6, 10, 36, 40), et
(c) ledit groupe de soupapes (2) comprend une soupape à 3/2 voies (4), qui raccord soit ledit système de purge d'air (15), soit ledit réservoir d'air comprimé (12) à raccord dudit moyen à soupape (14), et
(d) ledit moyen à soupape comprend une soupape à 2/2 voies (14) qui ouvre ou ferme le raccord auxdites soupapes de soufflet d'air (16, 18, 24, 42, 44, 46).

2. Système de suspension pneumatique selon la revendication 1, **caractérisé en ce que** ledit groupe de soupapes (2) comprenant ledit moyen à soupape (14) et ledit capteur de pression (22) sont affectés à un essieu arrière (HA).

3. Système de suspension pneumatique selon la revendication 2, **caractérisé en ce que** des soufflets d'air (10, 36, 40) affectés à un essieu avant (VA) et à un essieu de levage (LA) sont aptes à être aéré ou désaéré au même temps moyennant ledit groupe de soupapes (2) affecté audit essieu arrière (HA).

4. Système de suspension pneumatique selon au moins une des revendications précédentes, **caractérisé en ce qu'**une soupape à 2/2 voies (16, 18, 42, 44) est affectée, en tant que soupape de soufflet d'air, aux soufflets d'air (6, 36) de chaque côté du véhicule au moins audit essieu arrière (HA) et audit essieu de levage (LA).

5. Système de suspension pneumatique selon au moins une des revendications précédentes, **caractérisé en ce qu'**au moins quelques-uns desdites soupapes (4, 14, 16, 18, 24, 42, 44, 46) sont des vannes magnétiques à un raccord pneumatique de commande pilote (48) pour une fonction pilote pneumatique électrique.

6. Système de suspension pneumatique selon la revendication 5, **caractérisé en ce qu'**au moins ledit groupe de soupapes (2), ledit capteur de pression (22) ainsi qu'une unité électronique de commande (ECU) sont combinés dans un seul module pour la fonction pilote pneumatique électrique

7. Système de suspension pneumatique selon au moins une des revendications précédentes, **caractérisé en ce qu'**un groupe de soupapes (8) affecté audit essieu avant (VA) comprend une soupape à 3/2 voies (24), servant à raccorder lesdits soufflets d'air (10) dudit essieu avant (VA), via un moyen d'étranglement (32), soit l'un à l'autre ou auxdites soupapes de soufflets d'air (16, 18, 42, 44, 46) des autres essieux (HA, LA).
